# EUROPÄISCHE PATENTSCHRIFT

(11) **EP 2 903 844 B1**
(45) Veröffentlichungstag und Bekanntmachung des Hinweises auf die Patenterteilung: **13.03.2019**
(21) Anmeldenummer: 13776990.7
(22) Anmeldetag: 02.10.2013
(51) Int. Cl.: B60K 11/04, B60K 11/08

(54) **ROLLOMODUL FÜR EIN KÜHLMODUL EINES FAHRZEUGS SOWIE FRONTENDELEMENT FÜR EIN FAHRZEUG**
ROLLER BLIND MODULE FOR A COOLING MODULE OF A VEHICLE AND FRONT END ELEMENT FOR A VEHICLE
MODULE DE STORE POUR MODULE DE REFROIDISSEMENT D'UN VÉHICULE ET ÉLÉMENT D'EXTRÉMITÉ AVANT POUR VÉHICULE

(30) Priorität: 05.10.2012 DE 102012109503
(43) Veröffentlichungstag der Anmeldung: 12.08.2015
(73) Patentinhaber: HBPO GmbH, 59552 Lippstadt (DE); Audi AG, 85045 Ingolstadt (DE)
(72) Erfinder: SCHMIDT, Ralf, 59302 Oelde (DE); BRÜCKNER, Reinhold, 33442 Herzebrock-Clarholz (DE); RAU, Jörg-Walter, 85049 Ingolstadt (DE)
(74) Vertreter: Vogel, Andreas
(86) Internationale Anmeldenummer: PCT/EP2013/070580
(87) Internationale Veröffentlichungsnummer: WO 2014/053567

(56) Entgegenhaltungen:
- CH-A- 205 734
- DE-A1-102006 042 627
- GB-A- 962 336
- GB-A- 2 479 044

## Beschreibung

Die Erfindung betrifft ein Rollomodul für ein Kühlmodul eines Fahrzeugs, wobei das Rollomodul am Kühlmodul angeordnet ist, aufweisend ein Rolloelement und zumindest einen Antrieb, durch den das Rolloelement von einer ersten Stellung in zumindest eine zweite Stellung abrollbar ist, wobei in der ersten Stellung das Rolloelement aufgerollt und in der zweiten Stellung das Rolloelement bzgl. der Fahrtrichtung des Fahrzeugs vor dem Kühlmodul angeordnet ist. Ferner betrifft die Erfindung ein Frontendelement für ein Fahrzeug, zumindest aufweisend einen Montageträger, ein Kühlmodul, das an dem Montageträger befestigt ist, und ein Rollomodul für das Kühlmodul.

In modernen Fahrzeugen, insbesondere in Kraftfahrzeugen, wird durch einen Kühlergrill des Fahrzeugs bzw. durch die Öffnungen des Kühlergrills einströmende Frischluft kanalisiert und auf ein Kühlmodul des Fahrzeugs geleitet. Insbesondere durch dieses gezielte kanalisierte Leiten des Luftstroms auf das Kühlmodul kann sichergestellt werden, dass entsprechend der Ausgestaltung des Kühlmoduls beispielsweise ein Motor des Fahrzeugs und/oder Ladeluft für diesen Motor effizient gekühlt und/oder der Fahzeuginnenraum effizient klimatisiert werden kann.

Das Kühlmodul ist während des Betriebs des Fahrzeugs der Luftströmung ausgesetzt. Dadurch kann jedoch auch eine Verschmutzung des Kühlmoduls einhergehen. Dadurch wird die Funktionsfähigkeit des Kühlmoduls beeinträchtigt. Beispielsweise kann eine Verschmutzung des Kühlmoduls mit Sand, Staub, Schlamm oder anderen Schmutzarten zu einer Verminderung der Kühlleistungen des Kühlmoduls führen. Auch eine direkte Beschädigung des Kühlmoduls, insbesondere beispielsweise durch Steinschlag, ist denkbar. Auch eine Steuerung der Menge der auf das Kühlmodul strömenden Luft kann vorteilhaft sein. So können beispielsweise aus Gründen der Reduzierung des CO2-Ausstoßes insbesondere bei Kraftfahrzeugen Systeme zum Einsatz kommen, die eine Steuerung des Kühllufteintritts ermöglichen. Diese Systeme können dabei beispielsweise die Kaltlaufphase des Motors des Fahrzeugs verkürzen und eine schnellere Erreichung der Betriebstemperatur des Motors des Kraftfahrzeugs sicherstellen.

Es ist bekannt, in derartigen Systemen zum Steuern des Kühllufteintritts Klappensysteme einzusetzen. Diese Klappensysteme weisen jedoch, je nach Klappenhöhe, im geöffneten Zustand einen erheblichen Platzbedarf in Fahrzeuglängsrichtung auf. Auch wird durch die Klappen im geöffneten Zustand die Luftströmung abgelenkt, je nach Öffnungswinkel der Klappen in verschiedenen Winkeln, und kann somit nicht zu jeder Zeit optimal genutzt werden.

Um diese nachteiligen Eigenschaften von Klappensystemen zu umgehen, kann es von Vorteil sein, ein Klappensystem durch ein Rollomodul zu ersetzen. So ist beispielsweise aus einer noch nicht veröffentlichten Anmeldung der Anmelderin bekannt, ein derartiges Rollomodul direkt hinter dem Kühlergrill des Fahrzeugs anzuordnen. Das Rollomodul hat dabei gegenüber einem Klappensystem insbesondere den Vorteil, dass es in Fahrzeuglängsrichtung nur einen geringen Platzbedarf aufweist. Durch die Anordnung direkt hinter dem Kühlergitter ergibt sich zusätzlich zur Steuerbarkeit der Luftströmung der weitere Vorteil, dass bei geschlossenem Rollomodul der Luftwiderstand des Fahrzeugs verringert ist. Durch die direkte Anordnung hinter dem Kühlergitter ergibt sich jedoch gleichzeitig, dass das Rollomodul vom Kühlmodul des Fahrzeugs beabstandet ist. Dadurch kann in diesen Zwischenraum eindringender Schmutz das Kühlmodul verschmutzen und im schlimmsten Fall auch beschädigen.

Die CH 205 734 A offenbart ein Rolloelement für ein Kraftfahrzeug, bei der eine Abstreifwalze zum Einsatz kommt, an der beim Einziehen des Rollos Fremdkörper des Rollos gebrochen und abgestreift werden.

Es ist daher Aufgabe der vorliegenden Erfindung, die voranstehend genannten Nachteile bekannter Luftsteuerungssysteme zu beheben. Insbesondere ist es Aufgabe der Erfindung, ein Rollomodul für ein Kühlmodul eines Fahrzeugs sowie ein Frontendmodul eines Fahrzeugs zu schaffen, bei denen in einfacher und kostengünstiger Weise eine besonders einfache Steuerung der Luftströmung zum Kühlmodul des Fahrzeugs und gleichzeitig ein Schutz des Kühlmoduls vor Verschmutzung und Beschädigung erreicht werden kann.

Die voranstehende Aufgabe wird gelöst durch ein Rollomodul für ein Kühlmodul eines Fahrzeugs mit den Merkmalen des unabhängigen Anspruchs 1 sowie durch ein Frontendelement für ein Fahrzeug mit den Merkmalen des Anspruchs 12. Weitere Merkmale und Details der Erfindung ergeben sich aus den Unteransprüchen, der Beschreibung und den Zeichnungen. Dabei gelten Merkmale und Details die im Zusammenhang mit dem erfindungsgemäßen Rollomodul beschrieben sind, selbstverständlich auch im Zusammenhang mit dem erfindungsgemäßen Frontendelement und jeweils umgekehrt, so dass bzgl. der Offenbarung zu den einzelnen Erfindungsaspekten stets wechselseitig Bezug genommen wird bzw. werden kann.

Gemäß einem ersten Aspekt der Erfindung wird die Aufgabe gelöst durch ein Rollomodul für ein Kühlmodul eines Fahrzeugs, wobei das Rollomodul am Kühlmodul angeordnet ist, aufweisend ein Rolloelement, zumindest einen Antrieb, durch den das Rolloelement von einer ersten Stellung in zumindest eine zweite Stellung abrollbar ist, wobei in der ersten Stellung das Rolloelement aufgerollt und in der zweiten Stellung das Rolloelement bzgl. der Fahrtrichtung des Fahrzeugs vor dem Kühlmodul angeordnet ist, und eine Reinigungsvorrichtung mit zumindest einem Reinigungselement, wobei durch das Reinigungselement das Rolloelement reinigbar ist, wobei das Reinigungselement (21) ein Bürstenelement als Abstreifelement aufweist.

Das erfindungsgemäße Rollomodul ist direkt am Kühlmodul angeordnet. Bevorzugt ist das Rollelement in seiner ersten Position auf eine Wickelrolle aufgewickelt. Insbesondere ist das Rolloelement des Rollomoduls in zumindest einer zweiten Stellung bzgl. der Fahrtrichtung des Fahrzeugs vor dem Kühlmodul angeordnet, wobei der Abstand zwischen dem Rolloelement und dem Kühlmodul gering, insbesondere kleiner als 20 mm ist. Durch diese direkte Anordnung ist zum einen eine verbesserte Steuerung der Luftströmung auf das Kühlmodul des Fahrzeugs möglich. Es wird immer nur der Teil des Kühlmoduls durch die Luftströmung erreicht, die durch das Rolloelement des Rollomoduls in dessen zweiter Stellung freigegeben ist. Selbstverständlich sind dabei mehrere zweite Stellungen möglich, die einen unterschiedlichen Überdeckungsgrad bzgl. des Kühlmoduls des Fahrzeugs aufweisen. Insbesondere kann selbstverständlich auch eine zweite Stellung vorgesehen sein, in der das Kühlmodul vollständig gegenüber der Luftströmung abgedeckt ist. Das Rolloelement kann sich in seiner zumindest einen zweiten Stellung dabei, je nach Anordnung des Rollomoduls am Kühlmodul, horizontal, vertikal, oder einer anderen beliebigen Richtung vor dem Kühlmodul erstrecken. Selbstverständlich können auch mehrere Rollomodule an dem Kühlmodul vorgesehen sein. Ein weiterer Vorteil der direkten Anordnung des Rollomoduls am Kühlmodul ist ein verbesserter Schutz des Kühlmoduls vor Schmutz. Schmutz im Sinne der Erfindung kann dabei beispielsweise Staub, Sand, Schlamm, Splitt, Wasser, Schnee, Eis oder auch Insekten sein. Durch derartigen Schmutz kann das Modul des Fahrzeugs in seiner Kühlleistung beeinträchtigt oder im schlimmsten Fall auch beschädigt werden. Durch eine Abdeckung des Kühlmoduls durch das Rolloelement des Rollomoduls wird somit das Kühlmodul zuverlässig und sicher vor auftreffendem Schmutz geschützt. Dabei kann es vorkommen, dass sich der Schmutz auf dem Rolloelement ablagert. Erfindungsgemäß ist vorgesehen, dass das Rollomodul eine Reinigungsvorrichtung mit zumindest einem Reinigungselement, wobei durch das Reinigungselement das Rolloelement reinigbar ist, aufweist. Dadurch ist es möglich, den sich auf dem Rolloelement ansammelnden Schmutz wieder zu entfernen. Eine Beeinträchtigung der Funktion des Rolloelements des Rollomoduls durch den Schmutz auf dem Rolloelement kann dadurch sicher vermieden werden. Durch, insbesondere regelmäßiges, Reinigen des Rolloelements durch das Reinigungselement der Reinigungsvorrichtung kann somit eine Funktionalität des Rollomoduls zu jeder Zeit sichergestellt werden. Dies stellt eine besonders wartungsarme Ausgestaltung eines erfindungsgemäßen Rollomoduls für ein Kühlmodul eines Fahrzeugs dar.

Ferner kann bei einem erfindungsgemäßen Rollomodul vorgesehen sein, dass ein Unterstützungselement vorgesehen ist, das das Rolloelement in der zumindest einen zweiten Stellung unterstützt. Durch die anströmende Luftströmung kann es vorkommen, dass das Rolloelement des Rollomoduls einer hohen Druckbelastung ausgesetzt ist. Durch ein Unterstützungselement kann diese Druckbelastung aufgefangen werden. Insbesondere kann dafür das Unterstützungselement gitterartig ausgestaltet sein, um die Luftströmungen in den vom Rolloelement nicht abgedeckten Abschnitten des Kühlmoduls nicht unnötig zu behindern. Ferner kann auch vorteilhafterweise vorgesehen sein, dass die Kanten des Unterstützungselements abgerundet ausgestaltet sind, wodurch eine Beschädigung des Rolloelements, das durch die Luftströmung an das Unterstützungselement gedrückt wird, vermieden werden kann. Insgesamt kann durch die Unterstützung des Rolloelements durch das Unterstützungselement das Rolloelement selbst aus einem entsprechend weniger stabilen Material ausgebildet sein. Dadurch kann sich eine Gewichtsersparnis ergeben.

Darüber hinaus kann ein erfindungsgemäßes Rollomodul derart ausgebildet sein, dass zumindest ein Führungselement vorgesehen ist, durch das das Rolloelement beim Abrollen von der ersten in die zumindest eine zweite Stellung geführt ist. Insbesondere kann vorteilhafterweise vorgesehen sein, dass zwei Führungselemente vorgesehen sind, durch die das Rolloelement auf beiden Seiten längs der Abrollrichtung des Roloelements geführt ist. Dadurch werden die seitlichen Ränder des Rolloelements zu jeder Zeit sicher geführt, wodurch ein Flattern dieser Ränder, welches insbesondere bei einer großen Stärke der anströmenden Luftströmung vorkommen kann, unterbunden werden kann. Die durch das Rolloelement abgedeckte Fläche des Kühlmoduls ist somit zu jeder Zeit genau bestimmt. Auch wird durch derartige Führungselemente ein Verkanten des Rolloelements beim Verstellen des Rolloelements verhindert. Auch dadurch kann ein besonders störungsfreier Betrieb des erfindungsgemäßen Rollomoduls sichergestellt werden.

Besonders bevorzugt kann bei einem erfindungsgemäßen Rollomodul vorgesehen sein, dass der Antrieb ein Riemenantrieb ist. Durch einen derartigen Riemenantrieb ist es möglich, gleichzeitig eine Wickelrolle, auf der das Rolloelement des Rollomoduls aufgewickelt ist, anzutreiben und an dem Ende des Rolloelements anzugreifen, das sich bei einer Bewegung des Rolloelements von seiner ersten in seine zumindest eine zweite Stellung über das Kühlmodul bewegt. Durch diese mehrfache Kraftübertragung auf das Rolloelement kann durch einen als Riemenantrieb ausgebildeten Antrieb eine besonders einfache und sichere Verstellung des Rolloelements sichergestellt werden. Aufwendige Konstruktionen zum Verstellen des Rolloelements, beispielsweise über Zugbänder oder Ähnliches, sind nicht nötig.

Gemäß einer bevorzugten Weiterentwicklung eines erfindungsgemäßen Rollomoduls kann vorgesehen sein, dass das Rolloelement durch zumindest ein Klemmelement mit dem Riemenantrieb verbunden ist. Durch ein derartiges Klemmelement wird eine sichere Verbindung zwischen dem Rolloelement und dem Riemenantrieb sichergestellt. Insbesondere kann dabei bevorzugt sein, dass der Riemenantrieb einen Antriebsriemen aufweist, und dass das Klemmelement das Rolloelement mit diesem Antriebsriemen verbindet. Besonders bevorzugt ist ein derartiger Antriebsriemen auf beiden Seiten des Rolloelements parallel zur Abrollvorrichtung vorgesehen, wobei das Rolloelement mit jedem der Antriebsriemen durch zumindest ein Klemmelement verbunden ist. Selbstverständlich ist auch ein durchgängiges Klemmelement denkbar, das in diesem Fall gleichzeitig eine Abschlussleiste des Rolloelements bilden kann. Klemmelemente stellen dabei eine besonders einfache Art und Weise dar, das Rolloelement mit dem Riemenantrieb zu verbinden, so dass keinerlei weitere Verbindungselemente, wie beispielsweise Schrauben oder Nieten, nötig sind.

Ferner kann bei einem erfindungsgemäßen Rollomodul vorgesehen sein, dass das Reinigungselement zusätzlich als eine schmutzabweisende Oberfläche des Rolloelements ausgestaltet ist. Dafür kann beispielsweise die Oberfläche des Rolloelements derart ausgebildet sein, dass ein sogenannter Lotuseffekt auftritt. Schmutz bleibt dadurch auf der Oberfläche des Rolloelements nicht oder zumindest nur schwer haften bzw. wird durch Wasser leicht von der Oberfläche des Rolloelements abgewaschen. Auf diese Weise kann zu jeder Zeit eine schmutzfreie oder zumindest schmutzarme Oberfläche des Rolloelements sichergestellt werden.

Bei dem erfindungsgemäßen Rollomodul ist vorgesehen, dass das Reinigungselement ein Bürstenelement als Abstreifelement aufweist. Durch ein derartiges Abstreifelement, das sich insbesondere über die gesamte Breite des Rolloelements erstrecken kann, kann bei einer Bewegung des Rolloelements Schmutz von diesem abgestreift werden. Da im Betrieb des erfindungsgemäßen Rollomoduls das Rolloelement zwischen verschiedenen Stellungen des Rolloelements verstellt wird, kann so ebenfalls eine schmutzfreie Oberfläche des Rolloelements sichergestellt werden. Ein Bürstenelement stellt dabei ein Abstreifelement dar, das insbesondere nachgiebiger ist als ein massives, unflexibles festes Abstreifelement. Dadurch kann durch ein Abstreifelement, das als Bürstenelement ausgebildet ist, das Rolloelement beim Reinigen besser geschont werden.

Darüber hinaus ist bei einem erfindungsgemäßen Rollomodul zusätzlich denkbar, dass das Reinigungselement eine Vorrichtung zum Reinigen des Rolloelements mit einer Flüssigkeit aufweist. Eine derartige Vorrichtung kann beispielsweise ein oder mehrere Sprühdüsen sein. Durch eine derartige Flüssigkeit kann Schmutz vom Rolloelement abgewaschen werden. Dadurch ist insbesondere auch eine Entfernung von festhaftendem bzw. angetrocknetem Schmutz auf dem Rolloelement denkbar. Als Flüssigkeit kann dabei insbesondere Wasser, bevorzugt Wasser mit Reinigungszusätzen, verwendet werden. Auch durch eine derartige Ausgestaltung des Reinigungselements kann eine schmutzfreie Oberfläche des Rolloelements des erfindungsgemäßen Rollomoduls sichergestellt werden.

Darüber hinaus kann ein erfindungsgemäßes Rollomodul zusätzlich dahin gehend ausgestaltet sein, dass das Reinigungselement eine Vorrichtung zum Reinigen des Rolloelements durch Vibrationen aufweist. Durch die Vorrichtung zum Reinigen des Rolloelements durch Vibrationen wird das Rolloelement gezielt in Vibrationen versetzt. Dadurch wird die Verbindung des Schmutzes zum Rolloelement gelöst, wodurch der Schmutz abfällt. Dabei kann vorgesehen sein, das gesamte Rolloelement in Vibration zu versetzen oder nur Teile des Rolloelements lokal in Vibrationen zu versetzen. Wenn beispielsweise im Rollomodul Umlenkrollen vorhanden sind, können diese in Vibrationen versetzt werden, wodurch sich diese Vibrationen auch auf das Rolloelement lokal übertragen. Die Umlenkrollen sind dabei insbesondere dadurch ein bevorzugter Ort für diese Vibrationen, da durch die Richtungsänderung der Rollbewegung des Rolloelements die Haftung insbesondere großflächigen Schmutzes hier automatisch verringert ist. Auch durch eine Vibrationsvorrichtung kann somit eine schutzfreie Oberfläche des Rolloelements erreicht werden.

Ferner kann bei einem erfindungsgemäßen Rollomodul vorgesehen sein, dass die Reinigungsvorrichtung zur Reinigung des Reinigungselements, insbesondere durch eine Flüssigkeit und/oder durch Vibration ausgebildet ist. Das Reinigungselement, das zur Reinigung des Rolloelements vorgesehen ist, kann selbstverständlich selbst auch verschmutzen. Im verschmutzten Zustand kann ein derartiges Reinigungselement eine sichere und vollständige Reinigung des Rolloelements nicht mehr sicherstellen. Darüber hinaus kann über ein verschmutztes Reinigungselement sogar Schmutz auf das Rolloelement übertragen werden. Somit kann in diesem Fall auch eine Reinigung des Reinigungselements nötig sein. Dadurch, dass die Reinigungsvorrichtung auch zum Reinigen des Reinigungselements ausgebildet ist, kann so zu jeder Zeit eine sichere Funktion des Reinigungselements und damit eine Sicherstellung einer schmutzfreien Oberfläche des Rolloelements sichergestellt werden. Die Vorteile einer Flüssigkeitsreinigung und/oder einer Vibrationsreinigung, wie sie oben bereits für das Reinigungselement in Bezug auf Reinigung des Rolloelements dargestellt wurden, gelten selbstverständlich auch für die Reinigung des Reinigungselements selbst.

Besonders bevorzugt kann bei einem erfindungsgemäßen Rollomodul vorgesehen sein, dass zumindest eine Umlenkrolle vorgesehen ist, durch die die Auf- und Abrollrichtung des Rolloelements änderbar ist. Somit muss bei Vorhandensein zumindest einer Umlenkrolle eine Wickelrolle des Rolloelements, auf die das Rolloelement in seiner ersten Position aufgewickelt ist, nicht mehr derart angeordnet sein, dass das Rolloelement direkt von seiner ersten in seine zumindest eine zweite Position abgewickelt werden kann. Dadurch ergibt sich eine größere Platzierungsfreiheit, die Wickelrolle kann beispielsweise über dem Kühlmodul angeordnet werden. Dadurch kann ein unnötiger Platzbedarf des Rollomoduls in Fahrtrichtung des Fahrzeugs vermieden werden. Selbstverständlich sind auch mehrere Umlenkrollen denkbar. Die Umlenkrollen können dabei feststehend oder mitdrehend ausgestaltet sein. Auch eine Anordnung der Umlenkrollen in oder am Gehäuse des Rollomoduls ist denkbar. Durch derartige Umlenkrollen sind somit viele Design- und Platzierungsvarianten eines erfindungsgemäßen Rollomoduls realisierbar.

Gemäß einer Weiterentwicklung eines erfindungsgemäßen Rollomoduls kann vorgesehen sein, dass durch die zumindest eine Umlenkrolle das Rolloelement spannbar ist. Für eine derartige Spannfunktionalität können beispielsweise federelastische Elemente und/oder aktive Verstellelemente wie beispielsweise Elektromotoren vorgesehen sein. Ein Verknittern oder Wellenschlagen des Rolloelements und eine damit verbundene Gefahr des Verkantens des Rolloelements kann so vermieden werden. Dadurch kann eine sichere Funktionalität des Rolloelements und damit des erfindungsgemäßen Rollomoduls zu jeder Zeit sichergestellt werden.

Besonders bevorzugt kann bei einer Weiterentwicklung eines erfindungsgemäßen Rollomoduls vorgesehen sein, dass das zumindest eine Reinigungselement an der zumindest einen Umlenkrolle angeordnet ist. Dies stellt eine besonders platzsparende Anordnung eines Reinigungselements dar. Das Rolloelement wird beim Abrollen und Aufrollen an der Umlenkrolle vorbeigeführt. Am Rolloelement haftender Schmutz kommt so unweigerlich an der Umlenkrolle und somit auch an dem an der Umlenkrolle angeordneten zumindest einen Reinigungselement vorbei. Eine sichere Reinigung des Rolloelements durch das Reinigungselement kann so auf besonders einfache Art und Weise sichergestellt werden. Dabei ist das Reinigungselement ein Bürstenelement als Abstreifelement.

Ferner kann in einer Weiterentwicklung das erfindungsgemäße Rollomodul derart ausgestaltet sein, dass die zumindest eine Umlenkrolle drehbar gelagert ist, wobei die Drehung der zumindest einen Umlenkrolle derart begrenzt ist, dass das Rolloelement durch das Reinigungselement in nur einer Rollrichtung des Rolloelements reinigbar ist. Da das Rolloelement sowohl in der Auf- als auch in der Abrollrichtung an der Umlenkrolle vorbeigeführt wird, reicht es aus, das Rolloelement nur in einer Richtung zu reinigen. Dadurch kann zum einen Energie bzw. Reinigungsflüssigkeit eingespart werden. Zum anderen ist auch eine mögliche Behinderung der Rollbewegung, die beim Reinigen des Rolloelements auftreten kann, nur in dieser einen Richtung präsent. Eine Bewegung in die andere Rollrichtung, in der das Rolloelement nicht gereinigt wird, kann unbehindert erfolgen. Auch dadurch kann beispielsweise der Energiebedarf des Antriebs verringert werden.

Besonders bevorzugt kann in einer Weiterentwicklung eines erfindungsgemäßen Rollomoduls vorgesehen sein, dass die Drehung der zumindest einen Umlenkrolle durch zumindest einen Anschlag begrenzt ist und/oder die eine Rollrichtung, in der das Rolloelement reinigbar ist, die Aufrollrichtung ist. Schmutz wird insbesondere nur dann auf das Rolloelement gelangen, wenn dieses sich in seiner zumindest einen zweiten Position befindet. Daher ist es sinnvoll, das Rolloelement nur in seiner Aufrollrichtung zu reinigen. Dadurch kann sichergestellt werden, dass das Rolloelement immer gereinigt aufgerollt wird, wodurch eine Beschädigung des Rolloelements durch mit aufgerollten Schmutz vermieden werden kann. Dabei kann es von Vorteil sein, die zumindest eine Umlenkrolle drehbar auszugestalten und deren Drehung durch zumindest einen Anschlag zu begrenzen. Anschläge sind dabei eine besonders einfache Möglichkeit, eine Bewegung, insbesondere eine Drehbewegung, der Umlenkrolle einzuschränken. Der oder die Anschläge können dabei derart ausgestaltet sein, dass die Bewegung des Rolloelements die Umlenkrolle beim Abrollen des Rolloelements derart weit dreht, dass das Reinigungselement, das als Bürstenelement ausgestaltet ist, nicht mehr reinigend am Rolloelement anliegt. In der Gegenrichtung, der Aufrollrichtung, kann der Anschlag derart ausgestaltet sein, dass eben in diesem Fall die Drehung der Umlenkrolle bis zu einem Punkt erfolgt, in dem das Reinigungselement derart am Rolloelement anliegt, dass es seine Reinigungsfunktion voll entfalten kann. Dadurch kann zum einen ein sicheres und einfaches Abrollen des Rolloelements und zum anderen eine Reinigung des Rolloelements beim Aufrollen des Rolloelements sichergestellt werden.

Auch kann ein erfindungsgemäßes Rollomodul dahin gehend ausgestaltet sein, dass zumindest eine, insbesondere optische Sensoreinheit zum Erfassen von Verunreinigungen vor und/oder auf dem Rolloelement und/oder dem Reinigungselement vorgesehen ist. Durch die Sensoreinheit ist ein Erfassen und Erkennen von Verunreinigungen ermöglicht. Der Reinigungsvorgang des Rolloelements und/oder des Reinigungselements kann in diesem Fall nur in den Fällen veranlasst werden, in denen eine derartige Reinigung auch nötig ist. Dadurch kann beispielsweise bei Verwendung einer Wasserreinigung eine Verschwendung von Reinigungsflüssigkeit vermieden werden. Auch ein Einsatz einer Vibrationsreinigung, nur dann wenn sie nötig ist, stellt einen energiesparenden Ansatz einer Reinigung dar.

Darüber hinaus kann gemäß einer Weiterentwicklung eines erfindungsgemäßen Rollomoduls vorgesehen sein, dass der Antrieb basierend auf den Messungen der zumindest einen Sensoreinheit ansteuerbar ist. Auf diese Art und Weise ist es möglich, einen zusätzlichen Schutz des Kühlmoduls zu erreichen. Durch die Sensoreinheit wird Schmutz vor dem Rolloelement detektiert. Dadurch kann erkannt werden, dass eine Verschmutzung und/oder Beschädigung des Kühlmoduls unmittelbar bevorstehen könnte. Durch eine Ansteuerung des Antriebs basierend auf den Messungen der zumindest einen Sensoreinheit ist es möglich, bei eintretendem Schmutz vor dem Kühlmodul das Rollomodul anzusteuern und das Rolloelement, insbesondere schnell, in seine zumindest eine zweite Position zu verstellen. Dadurch ist es möglich, eine zusätzliche Sicherheit vor Verschmutzung und/oder Beschädigung für das Kühlmodul bereitzustellen.

Gemäß einem zweiten Aspekt der Erfindung wird die Aufgabe durch ein Frontendelement mit sämtlichen Merkmalen des Anspruches 12 gelöst.

Ein Frontendelement bildet im Wesentlichen die Front eines Fahrzeugs. In ein derartiges Frontendelement sind dabei oftmals beispielsweise ein Kühlmodul und die dazugehörige Luftführung integriert. Ferner weist ein Frontendelement oftmals weitere funktionale Bauteile, wie beispielsweise Elemente eines Aufprallschutzsystems des Fahrzeugs, einen Stoßfänger mit Stoßfängerüberzug oder Beleuchtungselemente des Fahrzeugs auf. Dabei sind im Wesentlichen alle Baugruppen eines Frontendelements an einem Montageträger des Frontendelements angeordnet und befestigt.

Durch eine direkte Anordnung des Rolloelements am Kühlmodul kann eine verbesserte Steuerung der Lüftströmung, die in Fahrtrichtung des Fahrzeugs von vorne auf das Kühlmodul einströmt, erreicht werden. Ferner, insbesondere durch den geringen Abstand des Rolloelements vom Kühlmodul, ist ein verbesserter Schutz des Kühlmoduls vor Schmutz erreichbar. Das Kühlmodul kann dabei beispielsweise durch das Rolloelement vor Staub, Sand, Splitt, Wasser, Schlamm, Schnee, Eis und/oder Insekten geschützt werden. Dieser Schmutz wird vom Rolloelement vom Kühlmodul abgehalten. Erfindungsgemäß ist es von Vorteil, eine Reinigungseinrichtung mit zumindest einem Reinigungselement vorzusehen, das zur Reinigung des Rolloelements ausgebildet ist. Dadurch kann zu jeder Zeit sichergestellt werden, dass auch das Rolloelement frei oder zumindest im Wesentlichen frei von Schmutz ist. Dadurch kann eine sichere Funktionalität des Rolloelements zu jeder Zeit sichergestellt werden. Dadurch wird ein derartiges Frontendelement, zumindest in Bezug auf das Rolloelement des Rollomoduls, besonders wartungsarm.

Gemäß einer bevorzugten Weiterentwicklung eines erfindungsgemäßen Frontendelements für ein Fahrzeug kann vorgesehen sein, dass das Rollomodul gemäß dem ersten Aspekt der Erfindung ausgestaltet ist. Sämtliche Vorteile und Details, die im Bezug auf ein Rollomodul für ein Kühlmodul eines Fahrzeugs gemäß dem ersten Aspekt der Erfindung beschrieben worden sind, gelten somit auch für ein Frontendelement für ein Fahrzeug, das ein derartiges Rollomodul aufweist.

Darüber hinaus kann bei einem erfindungsgemäßen Frontendelement vorgesehen sein, dass das Kühlmodul einen Ladeluftkühler und/oder einen Klimakondensator und/oder einen Wasserkühler aufweist. In modernen Fahrzeugen kann das Kühlmodul verschiedenartige Aufgaben erfüllen. Dabei kann das Kühlmodul aus mehreren Kühlelementen, wie beispielsweise einem Ladeluftkühler, einem Klimakondensator oder einem Wasserkühler aufgebaut sein. Auch eine Integration der verschiedenen Funktionalitäten in ein Kühlelement ist denkbar. Erfindungsgemäß kann vorgesehen sein, dass jedes einzelne der Kühlelemente mit einem eigenen Rolloelement ausgestattet ist. Alternativ ist auch ein Rolloelement für das gesamte Kühlmodul denkbar. Auf diese Art ist es möglich, fahrzeugabhängig und spezifisch einen besonders guten Schutz des Kühlmoduls durch das Rollomodul sicherzustellen. Beispielsweise ist es denkbar, dass das Kühlmodul einen Klimakondensator und einen Wasserkühler aufweist, wobei optional vor dem Klimakondensator ein Ladeluftkühler vorgesehen sein kann. Das Rolloelement kann nun vor dem Klimakondensator zwischen seinen jeweiligen Stellungen abrollbar sein. Alternativ ist es ebenfalls denkbar, dass das Rolloelement zwischen dem Klimakondensator und dem Wasserkühler in seine jeweilige Stellung ab- oder aufgerollt werden kann.

Weitere Vorteile, Merkmale und Einzelheiten der Erfindung ergeben sich aus der nachfolgenden Beschreibung, in der unter Bezugnahme auf Zeichnungen Ausführungsbeispiele der Erfindung im Einzelnen beschrieben sind. Dabei können die in den Ansprüchen und in der Beschreibung erwähnten Merkmale jeweils einzeln für sich als auch in beliebiger Kombination sich auf sämtliche Figuren der Zeichnungen beziehen. Es zeigen jeweils schematisch:
- Fig. 1: ein mögliches Kühlmodul mit erfindungsgemäßem Rollomodul,
- Fig. 2: eine Teilansicht eines erfindungsgemäßen Rollomoduls,
- Fig. 3: eine weitere teilweise Detailansicht eines erfindungsgemäßen Rollomoduls und
- Fig. 4: ein Schnittbild durch Teile eines erfindungsgemäßen Rollomoduls.

Elemente mit den gleichen Funktionalitäten sind in den einzelnen Figuren mit denselben Bezugszeichen versehen.

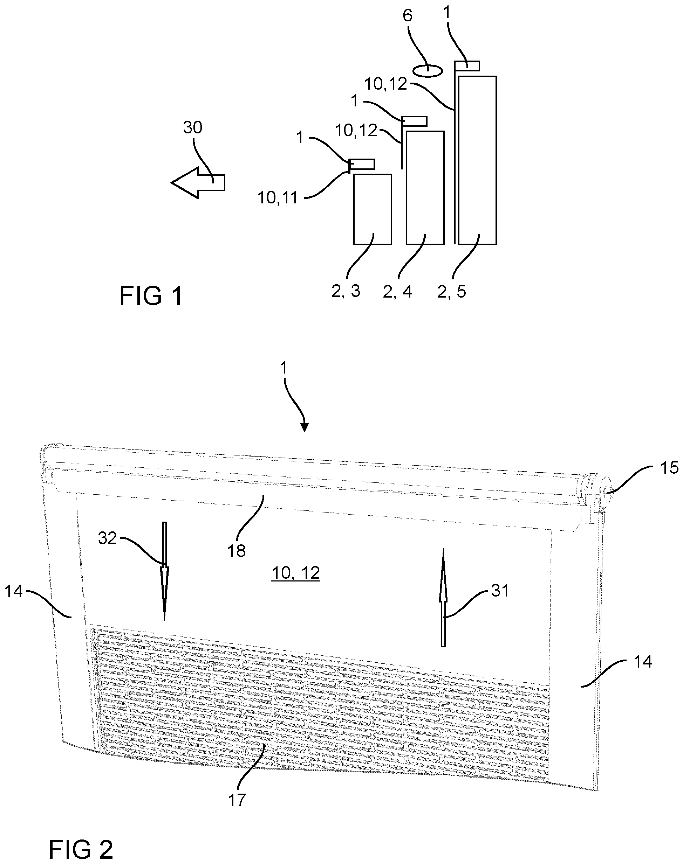

Figur 1 zeigt schematisch ein Kühlmodul 2 eines Fahrzeugs. Das Kühlmodul 2 weist in diesem Fall einen Ladeluftkühler 3, einen Klimakondensator 4 und einen Wasserkühler 5 auf. Jedes einzelne der Teile des Kühlmoduls 2 ist mit einem eigenen Rollomodul 1 ausgestattet. Jedes der Rollmodule 1 ist oberhalb eines Teils des Kühlmoduls 2 angeordnet und zu einer vertikalen Rollbewegung ausgebildet. Die Rolloelemente 10 der einzelnen Rollomodule 1 befinden sich dabei in unterschiedlichen Stellungen 11, 12. So ist das Rolloelement 10, das am Ladeluftkühler 2, 3 angeordnet ist, in seiner ersten Stellung 11. Das Rolloelement 10 ist vollständig aufgerollt und der Ladeluftkühler 2, 3 ist vollständig der Luftzuströmung ausgesetzt. Die Luftzuströmung kommt dabei im Wesentlichen entgegengesetzt der Fahrtrichtung, die durch Pfeil 30 angedeutet ist. Die Rolloelemente 10 der Rollomodule 1 des Klimakondensators 2, 4 und des Wasserkühlers 2, 5 befinden sich jeweils in einer zweiten Stellung 12. Dabei ist die zweite Stellung 12 des Rolloelements 10 des Klimakondensators 2, 4 derart ausgebildet, dass das Rolloelement 10 den Klimakondensator 2, 4 etwa zu einem Drittel abdeckt. Im Gegensatz dazu ist die zweite Stellung 12 des Rolloelements 10 des Wasserkühlers 2, 5 derart ausgebildet, dass das Rolloelement 10 den Wasserkühler 2, 5 vollständig abdeckt. Selbstverständlich sind für alle Rolloelemente 10 der Rollomodule 1 verschiedene zweite Stellungen 12 denkbar, in denen die einzelnen Teile des Kühlmoduls 2 bedarfsgerecht teilweise oder vollständig abgedeckt werden können. Ferner ist eine Sensoreinheit 6 abgebildet. Durch diese Sensoreinheit 6 kann Schmutz vor bzw. auf den Rolloelementen 10 detektiert werden. Dadurch ist es möglich, eine Reinigung der Rolloelemente 10 bedarfsgerecht zu aktivieren. Ferner ist es denkbar, Schmutz bereits vor einem Rolloelement 10 eines Rollomoduls zu detektieren. Im Falle eines Rolloelements 10 in seiner ersten Stellung 11 ist es in diesem Fall denkbar, das Rolloelement durch Anstieg eines Antriebs 15 (nicht gezeigt), in eine zweite Stellung 12 zu versetzen, in der das Kühlmodul 2, an dem das Rollomodul 1 angeordnet ist, vor dem anfliegenden Schmutz geschützt ist.

Das Kühlmodul 2 gemäß Figur 1 kann lediglich aus einem Klimakondensator 4 und einem Wasserkühler 5 ausgeführt sein, wobei der Ladeluftkühler 3 optional an einer nicht explizit dargestellten Stelle am Kraftfahrzeug angeordnet sein kann. Vorteilhafterweise befindet sich das Rolloelement 10 vor dem Klimakondensator 4 oder zwischen dem Klimakondensator 4 und dem Wasserkühler 5.

In Figur 2 ist schematisch eine mögliche Ausführungsform eines Rollomoduls 1 gezeigt. Das Rolloelement 10 befindet sich in einer zweiten Stellung 12, in der es ein Kühlmodul 2 (nicht abgebildet) teilweise abdeckt. Der Rest des Rolloelements 10 ist auf einer Wickelrolle 22 (nicht sichtbar) aufgewickelt, die sich hinter einer Blende 18 befindet. Diese Wickelrolle wird durch einen Antrieb 15 angetrieben, wodurch das Rolloelement 10 in einer Aufrollrichtung 31 oder Abrollrichtung 32 bewegt werden kann. Seitlich ist das Rolloelement 10 in Führungselementen 14 geführt, wodurch ein Flattern des Rolloelements 10 in der Luftströmung bzw. ein Verkanten des Rolloelements 10 bei einer Bewegung in Aufrollrichtung 31 oder Abrollrichtung 32 vermieden werden. Das Rolloelement 10 wird ferner durch ein Unterstützungselement 17 abgestützt. Dies hat insbesondere bei hohen Geschwindigkeiten den Vorteil, dass das Rolloelement 10 nicht durch die anströmende Luft aus den Führungselementen 14 herausgedrückt wird. Eine besonders gewichtssparende Ausgestaltung des Rolloelements 10 ist dadurch ebenfalls ermöglicht, da die Stabilität des Rolloelements 10 nicht allein durch das Material des Rolloelements 10 sichergestellt werden muss. Im Betrieb können sich auf dem Rolloelement 10 Schmutzpartikel ansammeln. Erfindungsgemäß ist daher vorgesehen, eine Reinigungsvorrichtung 20, hier abgedeckt durch die Blende 18, vorzusehen, mit der das Rolloelement 10 gereinigt werden kann. Eine Funktionalität des Rolloelements 10 kann dadurch zu jeder Zeit sichergestellt werden.

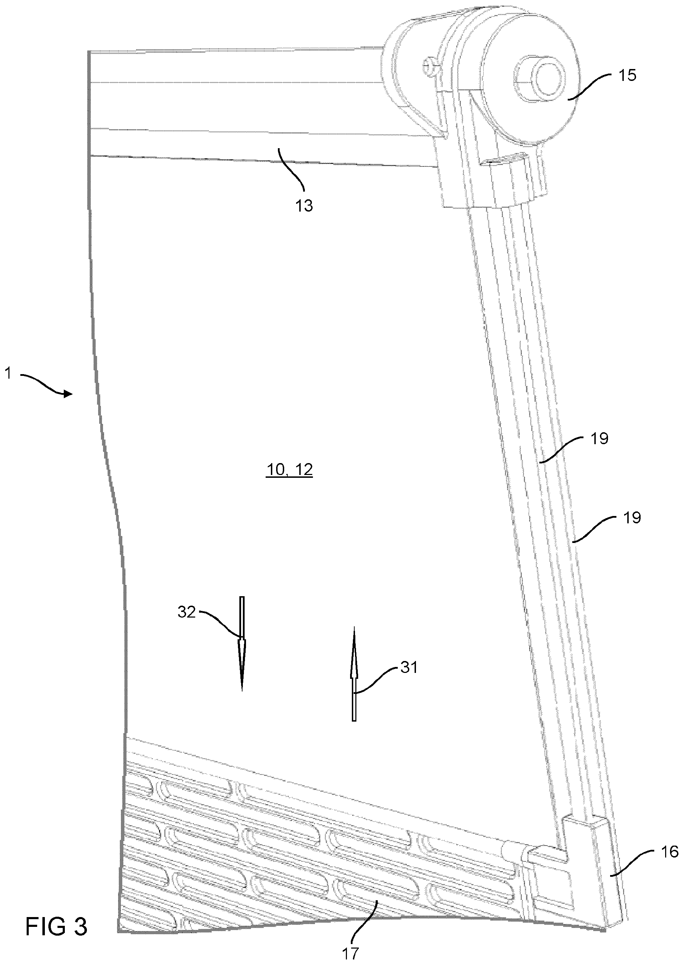

In Figur 3 ist eine weitere Teilansicht eines erfindungsgemäßen Rollomoduls 1 gezeigt. In dieser Teilansicht wurde das Führungselement 14 und die Blende 18 entfernt. Dadurch wird zum einen eine Umlenkrolle 13 sichtbar, durch die die Orientierung der Rollrichtung 31, 32 des Rolloelements 10, das sich in einer zweiten Stellung 12 befindet, verändert wird. Das Rolloelement 10 wird dabei wiederum durch ein Unterstützungselement 17 unterstützt. Sichtbar sind auch die Antriebsriemen 19 des Antriebs 15, die in Figur 2 durch das Führungselement 14 verdeckt waren. Am Antriebsriemen 19 ist ein Klemmelement 16 vorgesehen, durch das das Rolloelement 10 mit dem Antriebsriemen 19 verbunden wird. Der Antrieb 15 treibt somit zum einen die Wickelrolle 22 (nicht sichtbar) des Rolloelements 10 als auch die Bewegung des unteren Endes des Rolloelements 10 über das Klemmelement 16 an. Eine sichere Bewegung des Rolloelements 10, sowohl in seiner Aufrollrichtung 31 als auch in seiner Abrollrichtung 32, kann so zu jeder Zeit sichergestellt werden. Aufwendige Antriebskonstruktionen, beispielsweise über Zugbänder, können so vermieden werden.

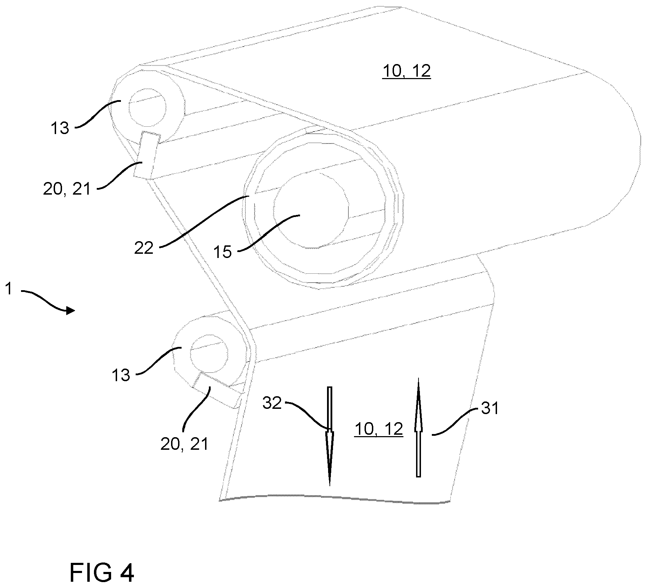

Figur 4 zeigt einen möglichen inneren Aufbau eines Teils eines erfindungsgemäßen Rollomoduls 1. Gezeigt ist dabei insbesondere eine Wickelrolle 22, die durch den Antrieb 15 angetrieben wird. Auf diese Wickelrolle 22 wird das Rolloelement 10 aufgewickelt. Hier ist nur ein Teil des Rolloelements 10 aufgewickelt, da es sich in einer zweiten Stellung 12 befindet, in der ein Großteil des Rolloelements 10 von der Wickelrolle 22 abgewickelt ist. Das Rolloelement 10 wird dabei in dieser Ausgestaltungsform eines erfindungsgemäßen Rollomoduls 1 über zwei Umlenkrollen 13 geführt. Beide Umlenkrollen 13 sind in diesem Fall mit einem Reinigungselement 21 einer Reinigungsvorrichtung 20 ausgestattet. Die beiden Umlenkrollen 13 sind hierbei zwischen Anschlägen (nicht sichtbar) derart drehbar gelagert, dass in Aufrollrichtung 31 die Reinigungselemente 21 der Reinigungsvorrichtung 20 am Rolloelement 10 anliegen. Die Reinigungselemente 21 sind dabei als Abstreifelemente ausgestaltet. Bei einer Bewegung des Rolloelements 10 in Abrollrichtung 32 drehen sich die Umlenkrollen bis zu einem weiteren Anschlag, wodurch die Reinigungselemente 21 vom Rolloelement 10 abgewandt werden. Ein Abrollen des Rolloelements 10 in Abrollrichtung 32 kann somit ohne Reinigung erfolgen. Dies hat den Vorteil, dass zum einen Schmutz, der sich auf dem Rolloelement 10 in seiner zweiten Stellung ansammelt, bei einer Bewegung des Rolloelements 10 in Aufrollrichtung 31 abgestreift wird, wodurch ein Aufrollen des Rolloelements 10 auf die Wickelrolle 22 zu jeder Zeit in sauberem unverschmutzten Zustand des Rolloelements 10 sichergestellt werden kann. Zum anderen wird ein Abrollen des Rolloelements 10 in Abrollrichtung 32 durch die Reinigungselemente 21 der Reinigungsvorrichtung 20 an den Umlenkrollen 13 nicht behindert. Dies stellt einen besonders energiesparenden Abrollvorgang sicher. Die Reinigungselemente 21 der Reinigungsvorrichtung 20 sind hier als Abstreifelemente ausgebildet. Selbstverständlich kann auch vorgesehen sein, dass eine oder beide Umlenkrollen zum Ausführen von Vibrationen ausgebildet sind, wodurch ebenfalls Schmutz von dem Rolloelement 10 entfernt werden kann. Auch ein Einsatz von einer Wasserreinigungsvorrichtung ist denkbar. Nicht gezeigt ist hierbei, dass auch vorgesehen sein kann, dass durch die Reinigungsvorrichtung das Reinigungselement selbst zusätzlich gereinigt werden kann. Dadurch kann sichergestellt werden, dass nicht durch ein verschmutztes Reinigungselement 21 Schmutz zurück auf das Rolloelement übertragen wird. Auch bei einer Reinigung eines Reinigungselements 21 sind dabei mehrere Möglichkeiten, wie beispielsweise Flüssigkeitsreinigung oder Vibrationsreinigung, denkbar.

Die voranstehende Erläuterung der Ausführungsformen beschreibt die vorliegende Erfindung nur im Rahmen von Beispielen. Selbstverständlich können einzelne Merkmale der Ausführungsformen, soweit technisch sinnvoll, frei miteinander kombiniert werden, ohne den Rahmen der vorliegenden Erfindung zu verlassen.

### Bezugszeichenliste

- 1: Rollomodul
- 2: Kühlmodul
- 3: Ladeluftkühler
- 4: Klimakondensator
- 5: Wasserkühler
- 6: Sensoreinheit

- 10: Rolloelement
- 11: erste Stellung
- 12: zweite Stellung
- 13: Umlenkrolle
- 14: Führungselement
- 15: Antrieb
- 16: Klemmelement
- 17: Unterstützungselement
- 18: Blende
- 19: Antriebsriemen

- 20: Reinigungsvorrichtung
- 21: Reinigungselement
- 22: Wickelrolle

- 30: Fahrtrichtung
- 31: Aufrollrichtung
- 32: Abrollrichtung

## Patentansprüche

1. Rollomodul (1) für ein Kühlmodul (2) eines Fahrzeugs, wobei das Rollomodul (1) am Kühlmodul (2) anordenbar ist, aufweisend ein Rolloelement (10), einen Antrieb (15), durch den das Rolloelement (10) von einer ersten Stellung (11) in zumindest eine zweite Stellung (12) abrollbar ist, wobei in der ersten Stellung (11) das Rolloelement (10) aufgerollt und in der zweiten Stellung (12) das Rolloelement (10) bzgl. der Fahrtrichtung (30) des Fahrzeugs vor dem Kühlmodul (2) angeordnet ist, und eine Reinigungsvorrichtung (20) mit zumindest einem Reinigungselement (21), wobei durch das Reinigungselement (21) das Rolloelement (10) reinigbar ist, **dadurch gekennzeichnet, dass** das Reinigungselement (21) ein Bürstenelement als Abstreifelement aufweist.

2. Rollomodul (1) nach Anspruch 1,
**dadurch gekennzeichnet,**
**dass** ein Unterstützungselement (17) vorgesehen ist, das das Rolloelement (10) in der zumindest einen zweiten Stellung (12) unterstützt.

3. Rollomodul (1) nach einem der Ansprüche 1 oder 2,
**dadurch gekennzeichnet,**
**dass** zumindest ein Führungselement (14) vorgesehen ist, durch das das Rolloelement (10) beim Abrollen von der ersten (11) in die zumindest eine zweite Stellung (12) geführt ist.

4. Rollomodul (1) nach einem der vorhergehenden Ansprüche 1 bis 3,
**dadurch gekennzeichnet,**
**dass** der Antrieb (15) ein Riemenantrieb (15) ist, insbesondere dass das Rolloelement (10) durch zumindest ein Klemmelement (16) mit dem Riemenantrieb (15) verbunden ist.

5. Rollomodul (1) nach einem der Ansprüche 1 bis 4,
**dadurch gekennzeichnet,**
**dass** das Reinigungselement (21) eine Vorrichtung zum Reinigen des Rolloelements (10) mit einer Flüssigkeit aufweist und/oder dass das Reinigungselement (21) eine Vorrichtung zum Reinigen des Rolloelements (10) durch Vibrationen aufweist.

6. Rollomodul (1) nach einem der vorhergehenden Ansprüche,
**dadurch gekennzeichnet,**
**dass** die Reinigungsvorrichtung (20) zum Reinigen des Reinigungselements (21), insbesondere durch eine Flüssigkeit und/oder durch Vibration, ausgebildet ist.

7. Rollomodul (1) nach einem der vorhergehenden Ansprüche,
**dadurch gekennzeichnet,**
**dass** zumindest eine Umlenkrolle (13) vorgesehen ist, durch die eine Auf- (31) und Abrollrichtung (32) des Rolloelements (10) änderbar ist, insbesondere dass durch die zumindest eine Umlenkrolle (13) das Rolloelement (10) spannbar ist.

8. Rollomodul (1) nach Anspruch 7,
**dadurch gekennzeichnet,**
**dass** das zumindest eine Reinigungselement (21) an der zumindest einen Umlenkrolle (13) angeordnet ist.

9. Rollomodul (1) nach Anspruch 8,
**dadurch gekennzeichnet,**
**dass** die zumindest eine Umlenkrolle (13) drehbar gelagert ist, wobei die Drehung der zumindest einen Umlenkrolle (13) derart begrenzt ist, dass das Rolloelement (10) durch das Reinigungselement (21) nur in einer Rollrichtung des Rolloelements (10) reinigbar ist, insbesondere dass die Drehung der zumindest einen Umlenkrolle (13) durch zumindest einen Anschlag begrenzt ist und/oder die eine Rollrichtung, in der das Rolloelement (10) reinigbar ist, die Aufrollrichtung (31) ist.

10. Rollomodul (1) nach einem der vorhergehenden Ansprüche,
**dadurch gekennzeichnet,**
**dass** zumindest eine, insbesondere optische, Sensoreinheit (6) zum Erfassen von Verunreinigungen vor und/oder auf dem Rolloelement (10) und/oder dem Reinigungselement (21) vorgesehen ist.

11. Rollomodul (1) nach Anspruch 10,
**dadurch gekennzeichnet,**
**dass** der Antrieb (15) basierend auf Messungen der zumindest einen Sensoreinheit (6) ansteuerbar ist.

12. Frontendelement für ein Fahrzeug mit einem Rollomodul (1) gemäß einem der Ansprüche 1 bis 11.

13. Frontendelement nach Anspruch 12,
**dadurch gekennzeichnet,**
**dass** das Kühlmodul (2) einen Ladeluftkühler (3) und/oder einen Klimakondensator (4) und/oder einen Wasserkühler (5) aufweist.

14. Frontendelement nach einem der vorhergehenden Ansprüche,
**dadurch gekennzeichnet,**
**dass** das Rolloelement (10) vor dem Klimakondensator (4) oder zwischen dem Klimakondensator (4) und dem Wasserkühler (5) angeordnet ist.

## Claims

1. Roller blind module (1) for a cooling module (2) of a vehicle, wherein the roller blind module (1) is arrangeable on the cooling module (2), comprising a roller blind element (10), a drive (15), by means of which the roller blind element (10) can be unrolled from a first position (11) into at least one second position (12), wherein, in the first position (11), the roller blind element (10) is rolled up, and in the second position (12), the roller blind element (10), with respect to the direction of travel (30) of the vehicle, is arranged in front of the cooling module (2), and a cleaning device (20) with at least one cleaning element (21), wherein, through the cleaning element (21), the roller blind element (10) is cleanable, **characterized in that** the cleaning element (21) comprises a brush element as wiping element.

2. Roller blind module (1) according to claim 1,
**characterized in that**
a supporting element (17) is provided, which supports the roller blind element (10) in the at least one second position (12).

3. Roller blind module (1) according to one of claims 1 or 2,
**characterized in that**
at least one guiding element (14) is provided, through which the roller blind element (10) is guided in the unrolling from the first (11) into the at least one second position (12).

4. Roller blind module (1) according to one of the preceding claims 1 to 3,
**characterized in that**
the drive (15) is a belt drive (15), in particular **in that** the roller blind element (10), through at least one clamping element (16), is connected with the belt drive (15).

5. Roller blind module (1) according to one of claims 1 to 4,
**characterized in that**
the cleaning element (21) comprises a device for cleaning the roller blind element (10) with a liquid, and/or **in that** the cleaning element (21) comprises a device for cleaning the roller blind element (10) through vibrations.

6. Roller blind module (1) according to one of the preceding claims,
**characterized in that**
the cleaning device (20) is configured for cleaning the cleaning element (21), in particular through a liquid and/or through vibration.

7. Roller blind module (1) according to one of the preceding claims,
**characterized in that**
at least one deflection roller (13) is provided, through which a direction of rolling-up (31) and unrolling (32) of the roller blind element (10) is changeable, in particular **in that**, through the at least one deflection roller (13), the roller blind element (10) can be tensioned.

8. Roller blind module (1) according to claim 7,
**characterized in that**
the at least one cleaning element (21) is arranged on the at least one deflection roller (13).

9. Roller blind module (1) according to claim 8,
**characterized in that**
the at least one deflection roller (13) is rotatably mounted, wherein the rotation of the at least one deflection roller (13) is restricted in such a manner that the roller blind element (10) is cleanable through the cleaning element (21) only in one direction of roll of the roller blind element (10), in particular **in that** the rotation of the at least one deflection roller (13) is restricted through at least one stop, and/or the one direction of roll, in which the roller blind element (10) is cleanable, is the direction of rolling-up (31).

10. Roller blind module (1) according to one of the preceding claims,
**characterized in that**
at least one, in particular optical, sensor unit (6) for the detection of contaminants is provided in front of and/or on the roller blind element (10) and/or the cleaning element (21).

11. Roller blind module (1) according to claim 10,
**characterized in that**
the drive (15) is actuatable based upon measurements of the at least one sensor unit (6).

12. Front end element for a vehicle with a roller blind module (1) according to one of claims 1 to 11.

13. Front end element according to claim 12,
**characterized in that**
the cooling module (2) comprises a charge-air cooler (3) and/or an air-conditioning condenser (4), and/or a radiator (5).

14. Front end element according to one of the preceding claims,
**characterized in that**
the roller blind element (10) is arranged in front of the air-conditioning condenser (4), or between the air-conditioning condenser (4) and the radiator (5).

## Revendications

1. Module de store (1) pour un module de refroidissement (2) d'un véhicule, dans lequel le module de store (1) peut être disposé au niveau du module de refroidissement (2), présentant un élément de store (10), un entraînement (15), par lequel l'élément de store (10) peut être déroulé depuis une première position (11) dans au moins une deuxième position (12), dans lequel l'élément de store (10) est enroulé dans la première position (11) et l'élément de store (10) est disposé, par rapport au sens de marche (30) du véhicule, devant le module de refroidissement (2) dans la deuxième position (12), et un dispositif de nettoyage (20) avec au moins un élément de nettoyage (21), dans lequel l'élément de store (10) peut être nettoyé par l'élément de nettoyage (21), **caractérisé en ce que** l'élément de nettoyage (21) présente un élément formant balai en tant qu'élément racleur.

2. Module de store (1) selon la revendication 1,
**caractérisé en ce que**
un élément d'assistance (17) est prévu, qui assiste l'élément de store (10) dans l'au moins une deuxième position (12).

3. Module de store (1) selon l'une quelconque des revendications 1 ou 2,
**caractérisé en ce que**
au moins un élément de guidage (14) est prévu, par lequel l'élément de store (10) est guidé, lors du déroulement, depuis la première (11) dans l'au moins une deuxième position (12).

4. Module de store (1) selon l'une quelconque des revendications précédentes 1 à 3,
**caractérisé en ce que**
l'entraînement (15) est un entraînement à courroie (15), en particulier **en ce que** l'élément de store (10) est relié à l'entraînement à courroie (15) par au moins un élément de serrage (16).

5. Module de store (1) selon l'une quelconque des revendications 1 à 4,
**caractérisé en ce que**
l'élément de nettoyage (21) présente un dispositif pour nettoyer l'élément de store (10) avec un liquide, et/ou que l'élément de nettoyage (21) présente un dispositif pour nettoyer l'élément de store (10) par des vibrations.

6. Module de store (1) selon l'une quelconque des revendications précédentes,
**caractérisé en ce que**
le dispositif de nettoyage (20) est conçu pour nettoyer l'élément de nettoyage (21), en particulier par un liquide et/ou par vibration.

7. Module de store (1) selon l'une quelconque des revendications précédentes,
**caractérisé en ce que**
au moins une poulie de renvoi (13) est prévue, par laquelle un sens d'enroulement (31) et un sens de déroulement (32) de l'élément de store (10) peuvent être modifiés, en particulier **en ce que** l'élément de store (10) peut être tendu par l'au moins une poulie de renvoi (13).

8. Module de store (1) selon la revendication 7,
**caractérisé en ce que**
l'au moins un élément de nettoyage (21) est disposé au niveau de l'au moins une poulie de renvoi (13).

9. Module de store (1) selon la revendication 8,
**caractérisé en ce que**
l'au moins une poulie de renvoi (13) est monté de manière à pouvoir tourner, dans lequel la rotation de l'au moins une poulie de renvoi (13) est limitée de telle manière que l'élément de store (10) peut être nettoyé par l'élément de nettoyage (21) seulement dans un sens de roulement de l'élément de store (10), en particulier **en ce que** la rotation de l'au moins une poulie de renvoi (13) est limitée par au moins une butée et/ou **en ce que** l'un sens de roulement, dans lequel l'élément de store (10) peut être nettoyé, est le sens d'enroulement (31).

10. Module de store (1) selon l'une quelconque des revendications précédentes,
**caractérisé en ce qu'**
au moins une unité de capteur (6) en particulier optique, pour détecter des impuretés est prévue devant et/ou sur l'élément de store (10) et/ou l'élément de nettoyage (21).

11. Module de store (1) selon la revendication 10,
**caractérisé en ce que**
l'entraînement (15) peut être commandé sur la base de mesures de l'au moins une unité de capteur (6).

12. Elément d'extrémité avant pour un véhicule avec un module de store (1) selon l'une quelconque des revendications 1 à 11.

13. Elément d'extrémité avant selon la revendication 12,
**caractérisé en ce que**
le module de refroidissement (2) présente un refroidisseur d'air de suralimentation (3) et/ou un condenseur de climatisation (4) et/ou un refroidisseur d'eau (5).

14. Elément d'extrémité avant selon l'une quelconque des revendications précédentes,
**caractérisé en ce que**
l'élément de store (10) est disposé devant le condenseur de climatisation (4) ou entre le condenseur de climatisation (4) et le refroidisseur d'eau (5).
